# EUROPEAN PATENT SPECIFICATION

(11) **EP 0 600 616 B1**
(45) Date of publication and mention of the grant of the patent: **08.01.1997**
(21) Application number: 93308828.8
(22) Date of filing: 04.11.1993
(51) Int. Cl.: F16L 3/205

(54) **Slide bearing**
Gleitlager
Palier lisse

(30) Priority: 05.11.1992 GB 9223231
(43) Date of publication of application: 08.06.1994
(73) Proprietor: IMI MARSTON LIMITED, Fordhouses Wolverhampton WV10 6QJ (GB)
(72) Inventor: Bates, James Ian, Penn, Wolverhampton, WV2 4PU (GB)
(74) Representative: Parnham, Kevin

(56) References cited:
- DD-A- 250 163
- DE-C- 353 398
- DE-U- 1 900 434
- DE-U- 1 968 383
- US-A- 3 467 143
- US-A- 3 785 407
- US-A- 4 852 831

## Description

The present invention relates to a slide bearing and more particularly, but not exclusively, to a slide bearing for use within aircraft pipe structures.

It is known that pipe structures expand and contract under pressure, temperature and load variations. Thus, within an aircraft it will be appreciated that pipe lengths may vary considerably during flight and as the environmental temperature changes. If nothing is done to compensate these pipe length variations, the pipes would bow and create reaction loads that may even rupture mountings and/or the aircraft skin.

Conventionally, these pipe expansion problems have been solved by incorporating kinks and bends in the pipe to compensate for the expansion. However, in certain areas of an aircraft it is difficult to accommodate such kinks or bends due to space limitations. In these areas slide bearings are especially useful.

Typically a previous slide bearing has comprised an annular member through which the pipe passes with a packing material such as wire wool arranged to locate the pipe in the annular member. However, such assemblies are difficult to install and have a low reliability.

In DE-C-353398 there is described a slide bearing for a steam pipe in which displaceable pad assemblies define an accommodation for the pipe but bear on the pipe through point contacts only of spring-loaded balls.

It is an objective of the present invention to provide a slide bearing that substantially relieves the above mentioned problems.

In accordance with the present invention there is provided a slide bearing for securing in a housing, the bearing comprising an annular member arranged to accommodate a plurality of displaceable pad assemblies secured within the annular member to define a slide envelope to retain a pipe length, each displaceable pad assembly comprising a slide pad secured upon a compression element, whereby each slide pad is prolate and/or elongated in shape to facilitate location of a pipe in use.

The slide envelope may retain a pipe even though the pipe may undergo axial and/or radial and/or annular displacement.

Preferably, there are eight pad assemblies regularly spaced within the annular member.

The slide pads may be fabricated from graphite, nylon, aluminium, bronze or teflon.

The annular member may be fabricated from epoxy resin, aluminium or titanium,

The compression element may be a mechanical spring, a block of resilient plastics or rubber material or a hydraulic spring.

The annular member may be formed of several segments to facilitate assembly and installation.

The pad assembly may be adjustable to enable the position of the slide pad in the bearing to be adjusted.

An embodiment of the present invention will now be described by way of example only with reference to the accompanying drawing in which:-
Figure 1 illustrates in schematic cross-section a slide bearing;
Figure 2 illustrates a side view of the slide bearing; and
Figure 3 illustrates in expanded view a portion A of the slide bearing.

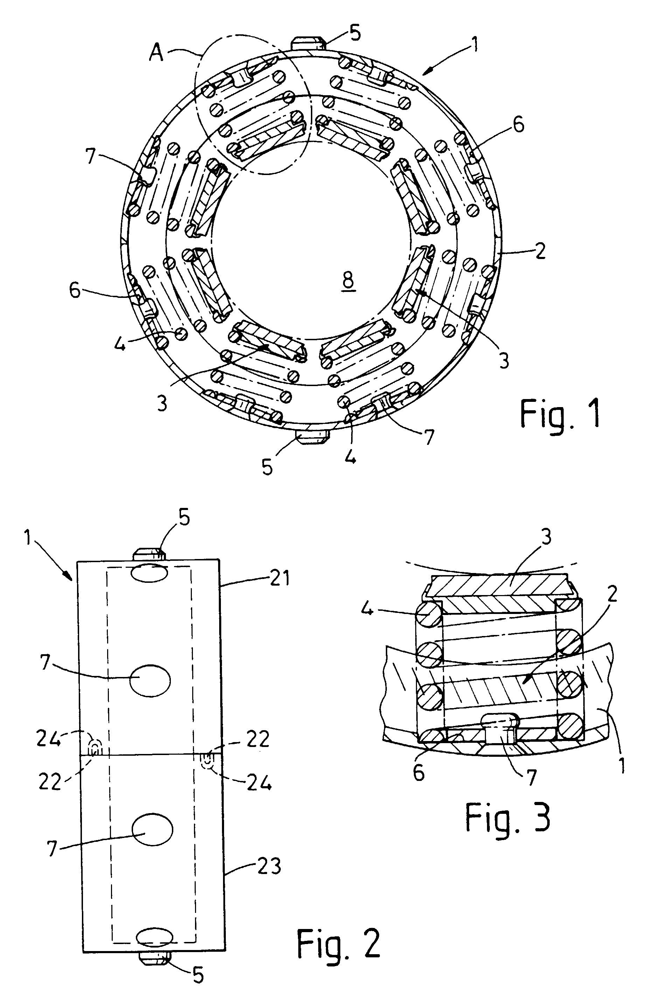

Consider Figures 1 and 3, a slide bearing 1 principally comprises an annular member 2, slide pads 3 and compression elements 4. The annular member 2 has locating lugs 5 to enable the bearing 1 to be located and secured in a housing (not shown). However, it will be appreciated that the bearing 1 and a housing could be integral or permanently secured together.

The annular member 1 includes regularly about its periphery, recess areas 6 to locate and facilitate capture of the compression elements 4. Typically, the compression elements 4 are compression springs although it will be understood that solid or suitably formed compressible plastics or rubber material could be used. The elements 4 are usually secured by nipple elements 7 which include a shoulder portion to engage or secured the element 4 to the annular member 1. The pads 3 are located at the ends of the compression elements 4 and may be held by a pinch effect of the elements 4 on the pads 3 or through some other form of adhesion or mechanical mechanism.

The pads 3 within the annular member 1 define a slide envelope 8 (shown in broken outline) to accommodate a pipe (not shown). The actual diameter of the envelope 8 is determined by the size of pipe it is envisaged it will accommodate. Furthermore, it will be appreciated that if the nipple element 7, extends to the pad 3 and is either screw or ratchet mounted it is possible to adjust the pad 3 position in the bearing 1 and so the range of compression. Ideally, each pad 3 and its compression element 4 should be under slight compression when a pipe is located in the bearing 1. With the compression elements 4 under slight compression the pipe will be more suitably held and located.

The pads 3 allow the pipe to slide under load and the compression elements 4 allow a degree of lateral movement. The material from which the pads 3 are fabricated depends upon the environment in which the bearing 1 must operate and upon the material of the pipe. Suitable materials include graphite, teflon, ceramic materials, aluminium/bronze and nylon.

The number of pads 3 to provide an adequate sliding bearing 1 is dependent upon the envisaged maximum reaction load required for the pipe. Eight pads 3 regularly spaced as illustrated in Figure 1 is usual but four pads 3 may be acceptable for lower reaction loads.

The pads 3 may be shaped or grooved to facilitate pipe slide. Thus the pads 3 are prolate or elongated in shape along the axis of a pipe to be held in the bearing 1 and may include a dished surface to increase contact between each pad 3 and the pipe.

As indicated previously, a slide bearing of the present invention may be integral within a housing or may be a retro-fit component. It will be understood that an integral embodiment may have an integral annular member 1. However, such an integral construction of the annular member would be inconvenient for a retro-fit embodiment. Consequently, it is typical for the annular member 1 to be formed of several segments. These segments enable an in-situ pipe to be surrounded by the bearing 1.

Referring to Figure 2, the annular member 1 consists of two equal segments 21, 23 respectively located by protrusion 22 and recesses 24 in respective segments 21, 23. In order to secure the segments 21, 23 together straps may be placed around the annular segments 21, 23 or other securing means can be used to secure the segments 21, 23 together to form the annular member 1. As an alternative, the segments 21, 23 could be mounted in respective halves of a housing and the annular member 1 formed when the housing is constructed. The locating lugs 5 in the annular member 1 may be used as securing points in order to make the slide bearing 1 integral with the housing.

It will be appreciated that the annular member 1 constitutes a large proportion of the weight of the slide bearing 1. Thus, for aircraft applications its weight must be as low as possible so the annular member 1 may be made from thermo-setting epoxy resin, aluminium or titanium.

## Claims

1. A slide bearing (1) for securing in a housing, the bearing (1) comprising an annular member (2) arranged to accommodate a plurality of displaceable pad assemblies (3, 4) secured within the annular member (2) to define a slide envelope (8) to retain a pipe length, each displaceable pad assembly (3, 4) comprising a slide pad (3) secured upon a compression element (4), characterised in that each slide pad (3) is prolate and/or elongated in shape to facilitate location of a pipe in use.

2. A slide bearing as claimed in Claim 1, wherein there are eight pad assemblies (3, 4) spaced within the annular member (2) to resiliently secure a pipe in use.

3. A slide bearing as claimed in Claim 1 or 2, wherein the slide pads (3) are fabricated from graphite, nylon, aluminium, bronze or teflon.

4. A slide bearing as claimed in Claim 1, 2 or 3, wherein the annular member (2) is fabricated from epoxy resin, aluminium or titanium.

5. A slide bearing as claimed in any preceding claim, wherein the compression elements (4) are a mechanical spring or a block of resilient plastics or rubber material or a hydraulic spring.

6. A slide bearing as claimed in any preceding claim wherein the annular member (2) is formed of several segments to facilitate assembly and installation.

7. A slide bearing as claimed in any preceding claim wherein the pad assembly (3, 4) is adjustable to enable the position of the slide pad (3) in the bearing (4) to be adjusted.

## Patentansprüche

1. Gleitlager (1) zur Befestigung in einem Gehäuse, wobei das Lager (1) ein ringförmiges Bauteil (2) aufweist, welches angeordnet ist, um eine Vielzahl an versetzbaren Gliederbaugruppen (3, 4) unterzubringen, welche in dem ringförmigen Bauteil (2) befestigt sind, um eine Gleithülle (8) zum Zurückhalten einer Rohrlänge zu bilden, wobei jede versetzbare Gliederbaugruppe (3, 4), die ein Gleitglied (3) aufweist, welches auf einem Kompressionselement (4) befestigt ist, dadurch gekennzeichnet ist, daß das Gleitglied (3) platt und/oder langgestreckt in der Gestalt ist, um die Positionierung eines Rohres im Gebrauch zu erleichtern.

2. Gleitlager gemäß Anspruch 1, wobei acht Gliederbaugruppen (3, 4) bestehen, die in dem ringförmigen Bauteil (2) beabstandet sind, um ein Rohr im Gebrauch federnd zu befestigen.

3. Gleitlager gemäß Anspruch 1 oder 2, wobei die Gleitglieder (3) aus Graphit, Nylon, Aluminium, Bronze oder Teflon hergestellt sind.

4. Gleitlager gemäß Anspruch 1, 2 oder 3, wobei das ringförmige Bauteil (2) aus Epoxyharz, Aluminium oder Titan hergestellt ist.

5. Gleitlager gemäß einem der vorhergehenden Ansprüche, wobei die Kompressionselemente (4) eine mechanische Feder oder ein Block an elastischen Kunststoffen oder Gummimaterial oder eine hydraulischen Feder sind.

6. Gleitlager gemäß einem der vorhergehenden Ansprüche, wobei das ringförmige Bauteil (2) aus mehreren Segmenten gebildet wird, um die Montage und den Einbau zu erleichtern.

7. Gleitlager gemäß einem der vorhergehenden Ansprüche, wobei die Gliederbaugruppe (3, 4) einstellbar ist, um die Position des Gleitgliedes (3) im Lager (4) einstellbar zu machen.

## Revendications

1. Support de glissement (1) destiné à être fixé dans un logement, le support (1) comprenant un élément annulaire (2) conçu pour loger plusieurs ensembles à semelle déplaçable (3, 4) montés dans l'élément annulaire (2) de manière à constituer une enveloppe de glissement (8) destinée à retenir un tronçon de tuyau, chaque ensemble à semelle déplaçable (3, 4) comprenant une semelle de glissement (3) montée sur un élément de compression (4), caractérisé en ce que chaque semelle de glissement (3) a une certaine étendue en longueur et/ou a une forme allongée afin de faciliter le positionnement d'un tuyau à l'utilisation.

2. Support de glissement selon la revendication 1, dans lequel il y a huit ensembles à semelle (3, 4) distants les uns des autres dans l'élément annulaire (2) pour supporter élastiquement un tuyau à l'utilisation.

3. Support de glissement selon la revendication 1 ou 2, dans lequel les semelles de glissement (3) sont réalisées en graphite, Nylon, aluminium, bronze ou Téflon.

4. Support de glissement selon la revendication 1, 2 ou 3, dans lequel l'élément annulaire (2) est réalisé en résine époxy, aluminium ou titane.

5. Support de glissement selon l'une quelconque des revendications précédentes, dans lequel les éléments de compression (4) sont un ressort mécanique ou un bloc de matière plastique élastique ou en matière caoutchouteuse ou un ressort hydraulique.

6. Support de glissement selon l'une quelconque des revendications précédentes, dans lequel l'élément annulaire (2) est formé de plusieurs segments afin de faciliter l'assemblage et l'installation.

7. Support de glissement selon l'une quelconque des revendications précédentes, dans lequel l'ensemble à semelle (3, 4) est réglable afin de permettre d'ajuster la position de la semelle de glissement (3) dans le support (4).
